# FASCICULE DE BREVET EUROPEEN

(11) **EP 4 185 467 B1**
(45) Date de publication et mention de la délivrance du brevet: **23.04.2025**
(21) Numéro de dépôt: 21752092.3
(22) Date de dépôt: 22.07.2021
(51) Int. Cl.: B33Y 50/00, B29C 64/386, B33Y 30/00, B29C 64/153, G06T 7/00, G06T 5/10, B22F 10/28, B33Y 10/00, B33Y 50/02, B22F 10/38, B22F 12/90

(54) **PROCÉDÉ DE DÉTECTION DE DÉFAUTS DANS UNE COUCHE DE POUDRE DE FABRICATION ADDITIVE DÉPOSÉE SUR UNE ZONE DE TRAVAIL**
VERFAHREN ZUR ERKENNUNG VON DEFEKTEN IN EINER PULVERSCHICHT ZUR GENERATIVEN FERTIGUNG AUF EINEM ARBEITSBEREICH
METHOD FOR DETECTING DEFECTS IN AN ADDITIVE MANUFACTURING POWDER LAYER DEPOSITED ON A WORKING AREA

(30) Priorité: 22.07.2020 FR 2007677
(43) Date de publication de la demande: 31.05.2023
(73) Titulaire: AddUp, 63118 Cébazat (FR)
(72) Inventeur: VERNET, Raphaël, 63118 CEBAZAT (FR); BELAUBRE, Pascal, 63118 CEBAZAT (FR); DEVROE, Sébastien, 63118 CEBAZAT (FR)
(74) Mandataire: Novagraaf Group
(86) Numéro de dépôt international: PCT/FR2021/051368
(87) Numéro de publication internationale: WO 2022/018382

(56) Documents cités:
- EP-A1- 3 378 039
- WO-A1-2016/123549
- WO-A1-2020/046212
- WANG FU-LIANG ET AL: "Detection of surface cutting defect on magnet using Fourier image reconstruction", JOURNAL OF CENTRAL SOUTH UNIVERSITY ; SCIENCE & TECHNOLOGY OF MINING AND METALLURGY, ZHONGNAN DAXUE, CN, vol. 23, no. 5, 25 May 2016 (2016-05-25), pages 1123 - 1131, XP035693647, ISSN: 2095-2899, [retrieved on 20160525], DOI: 10.1007/S11771-016-0362-Y

## Description

### DOMAINE TECHNIQUE GENERAL

La présente invention concerne le domaine de la fabrication additive et plus précisément de la fabrication additive sélective d'un objet tridimensionnel à partir de couches de poudre. En particulier, l'invention propose un procédé permettant la détection de défauts dans les couches de poudre avant leur consolidation sélective.

### ETAT DE L'ART

La fabrication additive sélective consiste à réaliser des objets tridimensionnels par consolidation de zones sélectionnées sur des strates successives de matériau pulvérulent (poudre métallique, poudre de céramique). Les zones consolidées correspondent à des sections successives de l'objet tridimensionnel. La consolidation se fait, couche par couche, par une fusion sélective totale ou partielle réalisée avec une source de rayonnement focalisé, telle qu'une source optique (laser de forte puissance par exemple) ou encore une source de faisceau de particules (par exemple un faisceau d'électrons - technologie dite EBM ou « Electron Beam Melting » selon la terminologie anglo-saxonne généralement utilisée dans le domaine).

Les méthodes de fabrication additive sélective d'un objet tridimensionnel à partir de couches de poudre permettent de fabriquer des pièces alliant précision et qualité de surface, avec des niveaux de détails de l'ordre de la dizaine de micromètres. Cependant cette précision et cette qualité de surface peuvent être fortement dégradées si les couches de poudre présentent des défauts de dépôts (dépôts intempestifs, manques de poudre (par exemple des « langues de chat ») ou encore ondulations dues à un mauvais étalement de la poudre par le rouleau ou la raclette chargés d'étaler celle-ci).

Afin d'éviter que ces problèmes n'affectent la qualité des pièces produites, il est nécessaire de pouvoir vérifier la qualité des couches de poudre déposées afin d'identifier la présence éventuelle de ces défauts avant leur consolidation sélective.

De nombreuses méthodes ont été développées à cet effet. On pourra par exemple se référer aux demandes de brevet WO 2020/046212 A1, EP3378039A1 et DE102018207405A1.

Ces méthodes utilisent habituellement des équipements spécialisés tel que des caméras industrielles, des dispositifs d'imagerie infrarouge, ainsi que des éclairages spécifiques. Elles sont donc onéreuses.

Elles reposent en outre généralement sur des analyses a posteriori et sur des algorithmes complexes tels que des méthodes de reconstruction d'image 3D pour comparer les différentes hauteurs, de modélisation statistique des défauts d'éclairage, *etc,* par exemple pour comparer les différentes hauteurs de poudre dans une même couche de poudre.

Elles relèvent ainsi essentiellement de la méthodologie de laboratoire et sont difficiles à intégrer dans un processus de fabrication et des machines de fabrication additive sélective destinées à un usage industriel.

### PRESENTATION DE L'INVENTION

Un but de l'invention est de proposer une méthode de détection de défauts dans une couche de poudre de fabrication additive qui puisse être mise en œuvre avec un matériel simple et sans modifications majeures des machines d'impression par fusion sur lit de poudre.

Un autre but de l'invention est aussi de permettre l'utilisation d'une telle méthode au cours du processus d'impression entre chaque étape de mise en couche et de fusion, en la rendant économe en ressources de calcul (temps d'exécution, mémoire nécessaire...). Selon un premier aspect, la présente invention concerne un procédé de détection de défauts dans une couche de poudre de fabrication additive déposée sur une zone de travail, comprenant des étapes de :
i. acquisition d'une image d'une couche de poudre de fabrication additive,
ii. détermination d'une représentation spectrale discrète de l'image acquise,
iii. filtrage en fréquence de la représentation spectrale discrète de l'image acquise par un filtre ayant au moins une fréquence de coupure,
iv. détermination d'une image filtrée à partir de la représentation spectrale discrète filtrée de l'image acquise,
v. analyse de l'image filtrée de manière à détecter les défauts dans la couche de poudre déposée.

L'étape v. d'analyse de l'image filtrée pouvant comprendre en outre des étapes :
v.a) d'amélioration du contraste de l'image filtrée,
v.b) de détection de contours et/ou de formes dans l'image filtrée au contraste amélioré,
v.c) de traitement des contours et/ou des formes détectés de manière à classer des types de défauts associés aux contours et/ou aux formes détectés.
v.d) de calcul d'un score associé à une couche de poudre de fabrication additive déposée ledit score caractérisant le nombre et/ou la taille de défauts présents dans la couche

Le filtre fréquentiel appliqué à l'étape iii. pouvant être un filtre passe-bande de type Gaussien.

Selon un deuxième aspect, la présente invention concerne un procédé de détection de défauts dans une couche de poudre de fabrication additive mettant en œuvre un modèle d'apprentissage automatique configuré pour détecter les défauts dans la couche de fabrication additive, dans lequel l'entrainement du modèle comprend la mise en œuvre d'un procédé selon le premier aspect.

Selon un troisième aspect, la présente invention concerne un procédé de fabrication additive sélective d'un objet tridimensionnel à partir de couches de poudre,
le procédé comprenant la mise en œuvre par un dispositif de fabrication additive sélective d'un objet tridimensionnel à partir de couches de poudre des étapes de :
A. d'application d'une couche de poudre de fabrication additive sur un support ou sur une couche préalablement consolidée,
B. de détection de défauts dans la couche de poudre de fabrication additive déposée selon le premier aspect avant sa consolidation.
C. d'émission d'un faisceau laser sur un premier point de la couche de poudre de fabrication additive, de sorte à consolider une première zone de la couche de poudre comprenant le premier point,
   répétées pour un nombre déterminé d'itérations,
   l'étape de détection de défauts dans la couche de poudre de fabrication additive déposée sur une zone de travail comprend en outre la mise en œuvre par des moyens de traitement (21, 31) de sous-étapes de :
      B.i. acquisition d'une image de la couche de poudre de fabrication additive,
      B.ii. détermination d'une représentation spectrale discrète de l'image acquise,
      B.iii. filtrage en fréquence de la représentation spectrale discrète de l'image acquise,
      B.iv. détermination d'une image filtrée à partir de la représentation spectrale discrète filtrée de l'image acquise,
      B.v. analyse de l'image filtrée de manière à détecter les défauts dans la couche de poudre déposée.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en œuvre du procédé selon l'invention ;
- la figure 2 est un schéma d'une architecture alternative pour la mise en œuvre du procédé selon l'invention ;
- la figure 3 représente les étapes d'un procédé de fabrication additive sélective d'un objet tridimensionnel à partir de couches de poudre selon l'invention ;
- la figure 4 représente les étapes d'un procédé de détection de défauts dans une couche de poudre de fabrication additive selon l'invention ;

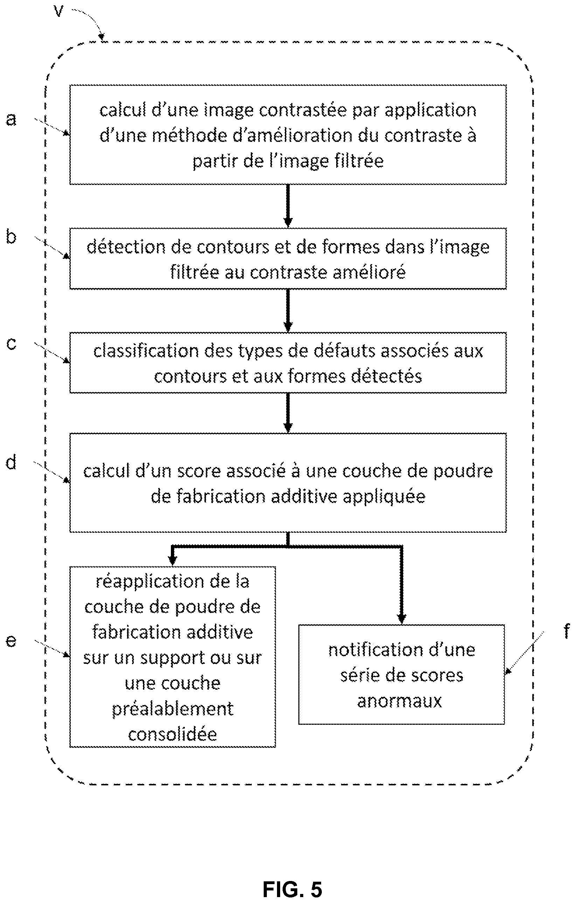

- la figure 5 représente les étapes d'un procédé d'analyse d'image filtrée selon l'invention.

### Architecture

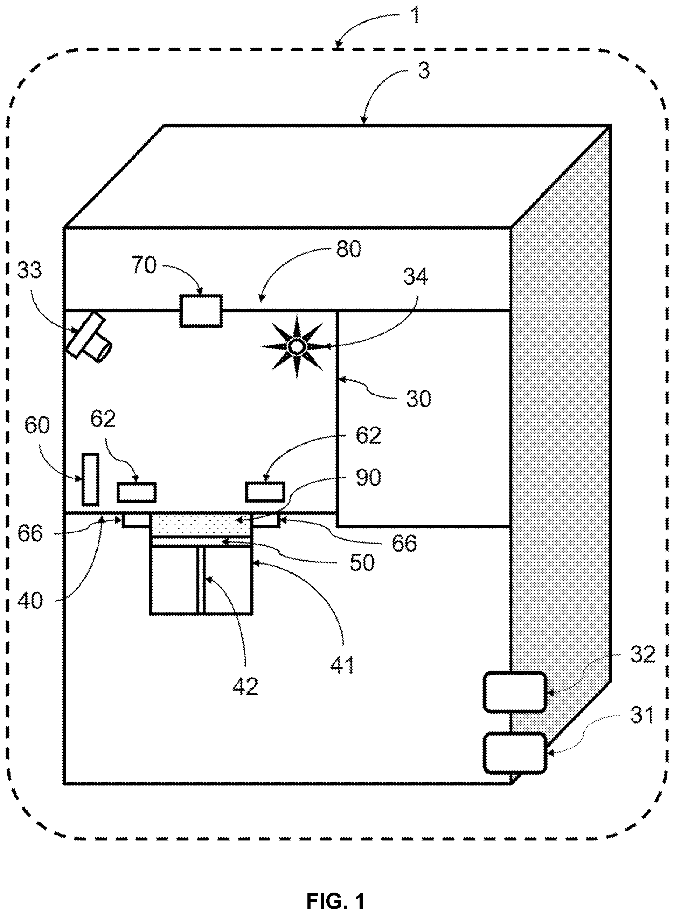

Le dispositif 1 de fabrication additive sélective de la **figure 1** comprend :
- une unité de fabrication additive 3;
- des moyens de traitement de données 31 de type processeur configurés pour mettre en œuvre un procédé de détection de défauts selon l'invention, et
- des moyens de stockage de données 32 tels qu'une mémoire informatique, par exemple un disque dur, sur lesquels sont enregistrées des instructions de code pour l'exécution d'un procédé de détection de défauts selon l'invention.

L'unité de fabrication additive 3 est une machine de fabrication additive sélective à partir de couches de poudre du type de celles aujourd'hui commercialisées par la société AddUp^{®}. Une telle machine comporte classiquement une chambre de fabrication 80 comprenant une enceinte 30 et un plan de travail 40. L'enceinte 30 comprend des flancs et un capot supérieur, et recouvre le plan de travail 40. L'enceinte peut, par exemple, être réalisée en métal ou en céramique.

La chambre de fabrication 80 comporte également un plateau 50 de fabrication destinée à recevoir la poudre de fabrication additive 90 sous la forme de couche successives et à soutenir une pièce lors de sa fabrication. Pour ce faire, le plateau 50 présente préférentiellement des caractéristiques de résistance mécanique permettant de soutenir une pièce de plusieurs dizaines voire centaine de kilogrammes. Ainsi le plateau 50 peut par exemple être réalisé en métal.

Selon le mode de réalisation ici présenté, le plateau 50 coulisse au travers d'une ouverture du plan de travail 40 dans une chemise 41 située sous le plan de travail 40. Le plan de travail 40 entoure le bord supérieur de la chemise de fabrication, et la chemise de fabrication permet de conserver une pièce fabriquée et la poudre non solidifiée qui l'entoure sur le plateau 50 dans un volume sensiblement clos. Cependant selon un autre mode de réalisation, le plateau 50 pourrait, par exemple, être juxtaposé au plan de travail 40.

Le plateau 50 se situe dans le plan du plan de travail 40 en début de cycle de fabrication, puis dans un plan sensiblement parallèle au plan du plan de travail 40 au fur et à mesure que le plateau descend dans la chemise.

Le plateau de fabrication 50 peut être de forme circulaire, rectangulaire, carré, triangulaire, *etc.*

En outre, la chambre de fabrication 80 comprend un chariot 60 coulissant au-dessus du plan de travail 40 et du plateau 50.

Le chariot 60 permet de répartir la poudre sur le plateau 50, ou sur une couche précédente de poudre, en vue de la fabrication d'une pièce, la poudre pouvant être distribuée de part et d'autre de la zone de travail par des doseurs 62 délivrant de la poudre sur un tiroir 66 qui se déplace en translation sous le doseur de manière à obtenir un cordon de poudre devant la zone de travail. Le chariot 60 peut, par exemple, comprendre une raclette et/ou un rouleau.

Par ailleurs, la chambre de fabrication 80 comprend un organe d'apport de puissance 70 permettant de fondre une poudre métallique. L'organe d'apport de puissance 70 peut, par exemple, être une source de faisceau laser, de faisceau d'électrons, etc.

En outre, la chambre de fabrication 80 comprend des moyens d'éclairage 34 tels qu'une lampe ou un flash photographique, ainsi que des moyens de prise de vue 33 tels qu'un capteur photographique. Il est aussi possible d'intégrer les moyens d'éclairage 34 et de prise de vue 33 en dehors de la chambre de fabrication, derrière des ouvertures fermées par des vitres.

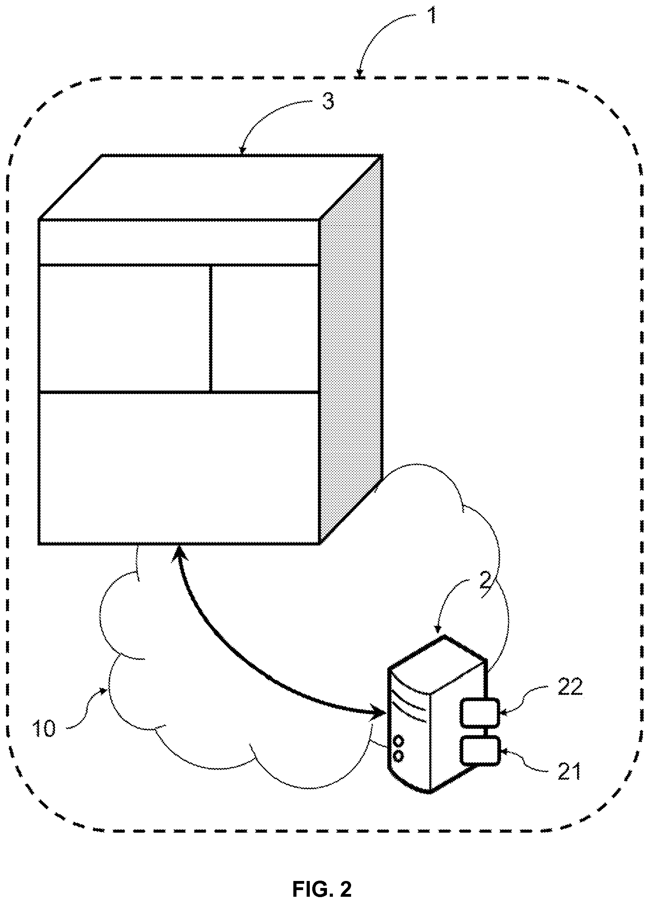

On notera qu'en variante, ces moyens de traitement et de stockage peuvent être déportés sur un serveur 2 à distance. C'est ce qui est illustré sur la **figure 2** sur laquelle on a représenté l'unité 3 reliée à un serveur 2 par un réseau d'échange de données 10, le serveur 2 comprenant :
- des moyens de traitement de données 21 de type processeur configurés pour mettre en œuvre un procédé de détection de défauts selon l'invention, et
- des moyens de stockage de données 22 tels qu'une mémoire informatique, par exemple un disque dur, sur lesquels sont enregistrées des instructions de code pour l'exécution d'un procédé de détection de défauts selon l'invention.

Les moyens de traitement de données 21 ou 31 sont configurés pour mettre en œuvre un procédé de fabrication qui sera décrit ci-après.

### Procédé de fabrication additive

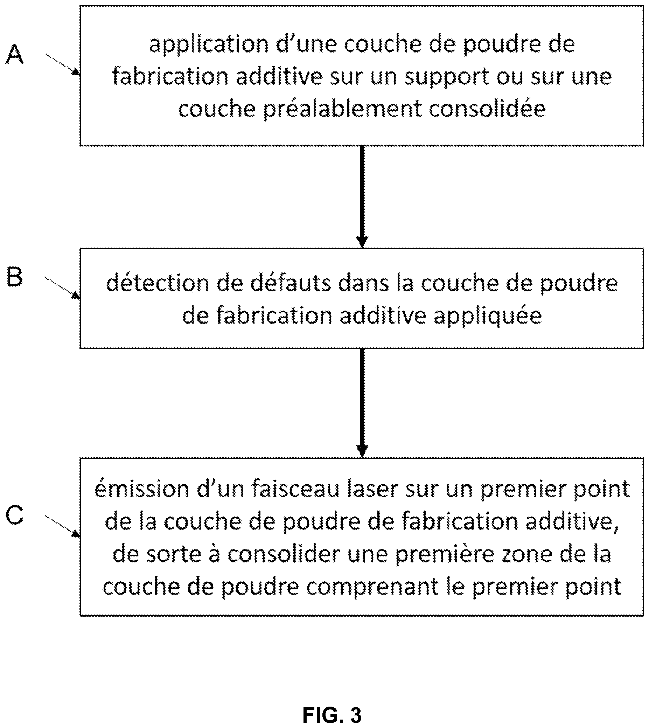

Un procédé de fabrication décrit en relation avec la **figure 3****,** comprend une première étape A, dite de « mise en couche » au cours de laquelle une couche de poudre de fabrication additive est déposée, grâce au chariot 60, sur le plateau 50.

Suite à cette première étape, la qualité de la couche de poudre de fabrication additive est évaluée dans une étape B de détection de défauts dans la couche de poudre de fabrication additive déposée. C'est au cours de cette étape que peuvent être détectés les défauts tels que les dépôts intempestifs, ou les manques de poudre.

En fonction de la qualité de la couche de poudre de fabrication additive évaluée au cours de l'étape de détection de défauts (étape B) il est possible de décider de répéter l'étape de mise en couche (étape A) afin de supprimer les défauts ayant pu apparaître. En outre, il est aussi possible en cas de détection répétée de défauts, ou bien si ces défauts sont trop nombreux dans une couche, d'avertir les opérateurs du dispositif de fabrication additive sélective d'un objet tridimensionnel à partir de couches de poudre afin de leur permettre d'évaluer la gravité des défauts, de diagnostiquer l'origine des défauts ainsi que de décider de la poursuite du processus de fabrication (étape F qui sera décrite ci-après). Enfin, une troisième étape, de fusion (étape C), une fois que la qualité de la couche de poudre de fabrication additive a été évaluée comme suffisante, consiste à émettre un faisceau laser sur les zones de la couche de poudre à consolider afin de constituer la pièce.

### Détection de défauts (étape B)

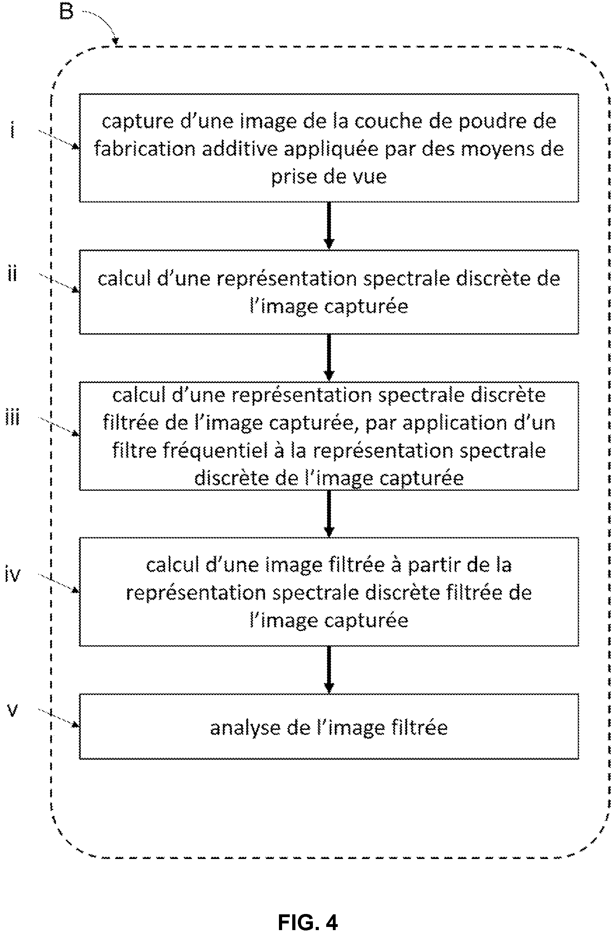

L'étape de détection de défauts de mise en couche tel que décrit en **figure 4** se déroule entre l'étape A de mise en couche et l'étape C de fusion et permet de s'assurer que l'étape C de fusion ne sera pas réalisée sur une couche de poudre présentant des défauts. La présence de défauts dans la couche de poudre pouvant entrainer la fabrication d'une pièce défectueuse. Cette détection de défauts est particulièrement cruciale dans le domaine de la fabrication additive à partir de couches de poudre car les temps de fabrication peuvent être particulièrement long et qu'il est donc important de détecter au plus vite des potentiels défauts, soit afin d'y remédier, soit afin de mettre fin au processus de fabrication au plus vite si ces défauts ne peuvent être corrigés dans le but d'éviter de gaspiller du temps de fabrication.

Afin de mettre en œuvre l'étape B de détection, le dispositif de fabrication additive 1 nécessite simplement d'être équipé de moyens de prise de vue classique et de moyens d'éclairage directionnel. Il n'est donc pas nécessaire d'utiliser des caméras industrielles très haute fréquence ou adaptés à des rayonnements électromagnétiques autres que le spectre visible. En outre, l'étape B de détection proposée comprend avantageusement des sous-étapes permettant de supprimer les effets de halo lumineux générés par les dispositifs d'éclairage monodirectionnel et évite ainsi d'avoir à équiper le dispositif de fabrication additive 1 d'un dispositif d'éclairage omnidirectionnel beaucoup plus complexe à intégrer.

Pour cela, l'étape B détection de défauts comprend une sous-étape i) d'acquisition d'une image de la couche de poudre de fabrication additive déposée par des moyens de prise de vue.

Ensuite une représentation spectrale discrète de l'image acquise est calculée lors d'une sous-étape ii) par une méthode de Transformation de Fourier Discrète (TFD). Un filtre fréquentiel est ensuite appliqué à cette représentation spectrale discrète de l'image acquise dans une sous-étape iii). Le filtre fréquentiel appliqué peut être plus particulièrement un filtre passe-bande gaussien, ce type de filtre permettant à la fois de supprimer l'effet de halo, ainsi que de supprimer le bruit présent dans l'image acquise, contrairement à un simple filtre passe-haut, qui ne retirerait que le halo. Après cela, l'image filtrée est reconstituée à partir du spectre filtré par une méthode de Transformation de Fourier Discrète inverse (TFD inverse) dans une sous-étape iv).

Enfin, l'image filtrée est analysée dans une sous-étape v), afin de détecter et d'évaluer les potentiels défauts de mise en couche. La sous-étape d'analyse comprend une opération a) d'optimisation de contraste afin de générer une image contrastée à l'aide d'une méthode de rehaussement de contraste local, par exemple par la technique d'égalisation d'histogramme adaptatif avec limitation de contraste (Contrast limited Adaptative Histogram Equalization CLAHE). Suite à cela une méthode de détection de contours ou de détection de région (Blob detection en anglais) est effectuée dans une opération b), une telle méthode peut être par exemple une différence de gaussiennes afin d'extraire les variations dans la texture de la couche de poudre de fabrication additive correspondants à des défauts de mise en couche. Une opération c) de classification de défauts est ensuite effectuée afin de classifier les défauts, avec comme classes par exemple « dépôts intempestifs », « manque de poudre » et « défauts de rouleaux ». Puis un score peut être calculé pour toute l'image, en fonction des défauts détectés, lors d'une opération d). Ce score est calculé selon des propriétés géométriques de l'ensemble des contours détectés dans l'image, ainsi que leur répartition. Plus particulièrement, le score peut par exemple être calculé selon la surface totale des contours détectés, la surface du ou des plus gros contours détectés, le nombre de contours détectés ayant une surface supérieure à un seuil, le nombre de contours détectés, la proportion de l'image occupé par des défauts (ratio de la surface totale des contours détectés sur la surface totale de l'image), leur distance à la zone ou est fabriquée la pièce, et leur connexité (au sens topologique). Dans un mode de réalisation préféré, l'ensemble de ces paramètres sont combinés selon une combinaison linéaire afin d'obtenir un score dépendant de plusieurs paramètres. Il est aussi possible d'utiliser des méthodes d'apprentissage artificiel pour calculer directement un score associé à la couche de poudre.

Enfin, le score associé à la couche est comparé à différents seuils. Dans une première opération e) le score est comparé à un premier seuil afin d'évaluer s'il est nécessaire, pour le dispositif de fabrication additive, de réappliquer la couche de poudre de fabrication additive sur un support ou sur une couche préalablement consolidée avant de passer à l'étape suivante du procédé de fabrication (l'étape B). Il est aussi possible d'utiliser un compteur, mis à jour à chaque fois que le score dépasse un second seuil (pouvant être différent du premier ou identique), dans une opération f), afin de décider s'il est nécessaire de notifier l'opérateur du dispositif de fabrication 1 d'un trop grand nombre de défauts dans la couche de poudre de fabrication additive, autrement dit de notifier l'opérateur lorsque le nombre de défauts comptés dépasse un nombre de défauts prédéfinis, afin par exemple de lui permettre de mettre fin au processus de fabrication et/ou de diagnostiquer la source des éventuels défauts.

### Modèle d'apprentissage automatique

Il est aussi possible d'utiliser un modèle d'apprentissage automatique tel qu'un séparateur à vaste marge (SVM), des forêts d'arbres décisionnels (en anglais « random forest classifier »), ou un réseau de neurones afin de réaliser la détection de défauts dans la couche de poudre. Il est alors possible d'utiliser l'étape de détection de défauts afin de générer un jeu de données d'entrainement pour l'entrainement du modèle d'apprentissage automatique. Ainsi, le score et/ou la décision de réappliquer la couche de poudre de fabrication additive avant de passer à l'étape suivante du procédé de fabrication est enregistré dans une base de données d'entrainement ainsi que l'image sur laquelle s'est basé ce calcul de score et/ou la prise de décision. Cette base de données peut ainsi être utilisée dans le cadre de l'entrainement d'un modèle d'apprentissage automatique notamment pour des taches de classification binaire (déterminer si la couche a bien été appliquée ou non), ou bien multi-classe ou multi-label (par exemple donner une appréciation de la qualité de la mise en couche), ou bien de classement (en anglais ranking) à l'aide d'une évaluation numérique similaire au score permettant de classer un ensemble d'images de mise en couche de la meilleure (en termes de défauts) à la plus mauvaise.

## Revendications

1. Procédé de détection de défauts dans une couche de poudre de fabrication additive déposée sur une zone de travail, le procédé comprenant, avant la consolidation sélective de la couche de poudre, la mise en œuvre par des moyens de traitement (21, 31) des étapes suivantes :
i. acquisition d'une image de la couche de poudre de fabrication additive déposée,
ii. détermination d'une représentation spectrale discrète de l'image acquise,
iii. filtrage en fréquence de la représentation spectrale discrète de l'image acquise par un filtre ayant au moins une fréquence de coupure,
iv. détermination d'une image filtrée à partir de la représentation spectrale discrète filtrée de l'image acquise,
v. analyse de l'image filtrée de manière à détecter les défauts dans la couche de poudre déposée.

2. Procédé de détection de défauts dans une couche de poudre de fabrication additive selon la revendication 1, dans lequel l'étape v. d'analyse de l'image filtrée comprend des étapes de :
v.a) amélioration du contraste de l'image filtrée,
v.b) détection de contours et/ou de formes dans l'image filtrée au contraste amélioré,
v.c) Traitement des contours et/ou des formes détectés de manière à classer des types de défauts associés aux contours et/ou aux formes détectés.

3. Procédé de détection de défauts dans une couche de poudre de fabrication additive selon l'une des revendications 1 et 2, dans lequel le filtre fréquentiel appliqué à l'étape iii. est un filtre passe-bande.

4. Procédé de détection de défauts dans une couche de poudre de fabrication additive selon l'une des revendications 2 et 3, comprenant en outre une étape v.d) de calcul d'un score associé à une couche de poudre de fabrication additive déposée, ledit score caractérisant le nombre et/ou la taille de défauts présents dans la couche.

5. Procédé de détection de défauts dans une couche de poudre de fabrication additive comprenant la mise en œuvre par des moyens de traitement (21, 31) d'un modèle d'apprentissage automatique configuré pour détecter les défauts dans la couche de fabrication additive, dans lequel l'entrainement du modèle comprend la mise en œuvre d'un procédé selon l'une des revendication 1 à 4.

6. Procédé de fabrication additive sélective d'un objet tridimensionnel à partir de couches de poudre, le procédé comprenant la mise en œuvre par un dispositif de fabrication additive sélective d'un objet tridimensionnel à partir de couches de poudre (1) des étapes de :
A. application d'une couche de poudre de fabrication additive sur un support ou sur une couche préalablement consolidée,
B. détection de défauts dans la couche de poudre de fabrication additive déposée avant sa consolidation,
C. émission d'un faisceau laser sur un premier point de la couche de poudre de fabrication additive, de sorte à consolider une première zone de la couche de poudre comprenant le premier point,
répétées pour un nombre déterminé d'itérations,
dans lequel l'étape de détection de défauts dans la couche de poudre de fabrication additive déposée sur une zone de travail comprend en outre la mise en œuvre du procédé selon l'une quelconque des revendications 1 à 4.

7. Procédé de fabrication additive sélective d'un objet tridimensionnel à partir de couches de poudre selon la revendication 6, comprenant en outre une opération v.d) de calcul d'un score associé à une couche de poudre de fabrication additive déposée.

8. Procédé de fabrication additive sélective d'un objet tridimensionnel à partir de couches de poudre selon la revendication 7, dans lequel lorsque le score calculé lors de l'opération v.d) est supérieur à un premier seuil, le procédé comprend en outre une opération v.e) de réapplication, par le dispositif de fabrication additive sélective d'un objet tridimensionnel à partir de couches de poudre (1), de la couche de poudre de fabrication additive sur un support ou sur une couche préalablement consolidée, puis la mise en œuvre de l'étape B.

9. Procédé de fabrication additive sélective d'un objet tridimensionnel à partir de couches de poudre selon la revendication 7, dans lequel lorsque le score calculé lors de l'opération v.d) est supérieur à un deuxième seuil, un compteur de nombre de défauts est mis à jour, le procédé comprend en outre une opération v.f) de notification de score anormal lorsque le nombre de défauts comptés dépasse un nombre de défauts prédéfinis.

10. Dispositif de fabrication additive (1) comprenant un plateau (50) sur lequel est appliquée une poudre de fabrication additive (90) et un chariot (60) adapté pour déposer la poudre de fabrication additive (90) sous la forme d'une couche de poudre de fabrication additive,
le dispositif de fabrication additive (1) comprenant en outre des moyens d'éclairage (34) et des moyens de prise de vue (33) adaptées pour acquérir une image de la couche de poudre de fabrication additive déposée, ainsi que des moyens de traitement de données (31, 21) et des moyens de stockage de données (32, 22) sur lesquels sont enregistrés des instructions de code pour l'exécution par les moyens de traitement de données (31, 21) d'un procédé de fabrication additive sélective d'un objet tridimensionnel à partir de couches de poudre selon l'une des revendications 6 à 9.

## Patentansprüche

1. Verfahren zum Erkennen von Defekten in einer Pulverschicht aus additiver Fertigung, die auf einem Arbeitsbereich abgelagert ist, das Verfahren umfassend, vor der selektiven Verfestigung der Pulverschicht, das Implementieren der folgenden Schritte durch Verarbeitungsmittel (21, 31):
i. Aufnehmen eines Bilds der abgelagerten Pulverschicht aus additiver Fertigung,
ii. Bestimmen einer diskreten spektralen Darstellung des aufgenommenen Bilds,
iii. Frequenzfiltern der diskreten spektralen Darstellung des aufgenommenen Bilds durch ein Filter mit mindestens einer Grenzfrequenz,
iv. Bestimmen eines gefilterten Bilds aus der gefilterten diskreten spektralen Darstellung des aufgenommenen Bilds,
v. Analysieren des gefilterten Bilds, um Defekte in der abgelagerten Pulverschicht zu erkennen.

2. Verfahren zum Erkennen von Defekten in einer Pulverschicht aus additiver Fertigung nach Anspruch 1, wobei Schritt v. des Analysierens des gefilterten Bilds die Schritte umfasst:
v.a) Erhöhen des Kontrasts des gefilterten Bilds,
v.b) Erkennen von Konturen und/oder Formen in dem gefilterten Bild mit erhöhtem Kontrast,
v.c) Verarbeiten der erkannten Konturen und/oder Formen, um die mit den erkannten Konturen und/oder Formen verbundenen Defektarten zu klassifizieren.

3. Verfahren zum Erkennen von Defekten in einer Pulverschicht aus additiver Fertigung nach einem der Ansprüche 1 und 2, wobei das in Schritt iii. angewendete Frequenzfilter ein Bandpassfilter ist.

4. Verfahren zum Erkennen von Defekten in einer Pulverschicht aus additiver Fertigung nach einem der Ansprüche 2 und 3, ferner umfassend einen Schritt v.d) eines Berechnens einer Punktzahl, die mit einer abgelagertem Pulverschicht aus additiver Fertigung verbunden ist, wobei die Punktzahl die Anzahl und/oder die Größe der in der Schicht vorhandenen Defekte kennzeichnet.

5. Verfahren zum Erkennen von Defekten in einer Pulverschicht aus additiver Fertigung, umfassend das Implementieren eines Maschinenlernmodells, das zum Erkennen von Defekten in der Schicht aus additiver Fertigung konfiguriert ist, durch Verarbeitungsmittel (21, 31), wobei das Trainieren des Modells das Implementieren eines Verfahrens nach einem der Ansprüche 1 bis 4 umfasst.

6. Verfahren für die selektive additive Fertigung eines dreidimensionalen Objekts aus Pulverschichten, das Verfahren umfassend das Implementieren durch eine Vorrichtung für die selektive additive Fertigung eines dreidimensionalen Objekts aus Pulverschichten (1) der Schritte des:
A. Aufbringens einer Pulverschicht aus additiver Fertigung auf einen Träger oder auf eine zuvor verfestigte Schicht,
B. Erkennens von Defekten in der abgelagerten Pulverschicht aus additiver Fertigung vor ihrer Verfestigung,
C. Aussenden eines Laserstrahls auf einen ersten Punkt der Pulverschicht aus additiver Fertigung, um einen ersten Bereich der Pulverschicht, umfassend den ersten Punkt, zu verfestigen,
wobei dies für eine bestimmte Anzahl von Iterationen wiederholt wird,
wobei der Schritt des Erkennens von Defekten in der auf einem Arbeitsbereich abgelagerten Pulverschicht aus additiver Fertigung ferner das Implementieren des Verfahrens nach einem der Ansprüche 1 bis 4 umfasst.

7. Verfahren für die selektive additive Fertigung eines dreidimensionalen Objekts aus Pulverschichten nach Anspruch 6, ferner umfassend einen Vorgang v.d) des Berechnens einer Punktzahl, die mit einer abgelagerten Pulverschicht aus additiver Fertigung verbunden ist.

8. Verfahren für die selektive additive Fertigung eines dreidimensionalen Objekts aus Pulverschichten nach Anspruch 7, wobei, wenn die während des Vorgangs v.d) berechnete Punktzahl größer als ein erster Schwellenwert ist, das Verfahren ferner einen Vorgang v.e) des erneuten Aufbringens der Pulverschicht aus additiver Fertigung auf einen Träger oder auf eine zuvor verfestigte Schicht durch die Vorrichtung für die selektive additive Fertigung eines dreidimensionalen Objekts aus Pulverschichten (1) und anschließend des Implementierens von Schritt B umfasst.

9. Verfahren für die selektive additive Fertigung eines dreidimensionalen Objekts aus Pulverschichten nach Anspruch 7, wobei, wenn die während des Vorgangs v.d) berechnete Punktzahl größer als ein zweiter Schwellenwert ist, ein Defektanzahlzähler aktualisiert wird, wobei das Verfahren ferner einen Vorgang v.f) eines Meldens einer abnormalen Punktzahl umfasst, wenn die Anzahl der gezählten Defekte eine vordefinierte Anzahl von Defekten überschreitet.

10. Vorrichtung (1) für additive Fertigung, umfassend eine Platte (50), auf die ein Pulver aus additiver Fertigung (90) aufgebracht ist, und einen Schlitten (60), der geeignet ist, um das Pulver aus additiver Fertigung (90) in Form einer Pulverschicht aus additiver Fertigung abzulagern,
die Vorrichtung (1) für additive Fertigung ferner umfassend Beleuchtungsmittel (34) und Abbildungsmittel (33), die geeignet sind, um ein Bild der abgelagerten Pulverschicht aus additiver Fertigung zu erfassen, sowie Datenverarbeitungsmittel (31, 21) und Datenspeichermittel (32, 22), auf denen Codeanweisungen für die Ausführung eines Verfahrens für die selektive additive Fertigung eines dreidimensionalen Objekts aus Pulverschichten nach einem der Ansprüche 6 bis 9 durch die Datenverarbeitungsmittel (31, 21) gespeichert sind.

## Claims

1. Method for detecting defects in an additive manufacturing powder layer deposited on a work zone, the method comprising, prior to selectively consolidating the powder layer, implementing by processing means (21, 31) the following steps:
i. acquiring an image of the deposited additive manufacturing powder layer,
ii. determining a discrete spectral representation of the acquired image,
iii. frequency filtering the discrete spectral representation of the acquired image by a filter having at least one cut-off frequency,
iv. determining a filtered image from the filtered discrete spectral representation of the acquired image,
v. analyzing the filtered image so as to detect the defects in the deposited powder layer.

2. Method for detecting defects in an additive manufacturing powder layer according to claim 1, wherein step v. of analyzing the filtered image comprises the steps of:
v.a) enhancing the contrast of the filtered image,
v.b) detecting contours and/or shapes in the contrast-enhanced filtered image,
v.c) processing detected contours and/or shapes so as to classify defect types associated with the detected contours and/or shapes.

3. Method for detecting defects in an additive manufacturing powder layer according to either claim 1 or claim 2, wherein the frequency filter applied in step iii. is a bandpass filter.

4. Method for detecting defects in an additive manufacturing powder layer according to either claim 2 or claim 3, further comprising a step v.d) of calculating a score associated with a deposited additive manufacturing powder layer, said score characterizing the number and/or size of defects present in the layer.

5. Method for detecting defects in an additive manufacturing powder layer, comprising implementing by processing means (21, 31) a machine learning model designed to detect the defects in the additive manufacturing layer, wherein training the model comprises implementing a method according to any of claims 1 to 4.

6. Method for selectively additively manufacturing a three-dimensional object from powder layers, the method comprising implementing, by means of a device for selectively additively manufacturing a three-dimensional object from powder layers (1), the steps of:
A. applying an additive manufacturing powder layer to a substrate or to a previously consolidated layer,
B. detecting defects in the deposited additive manufacturing powder layer before the consolidation thereof,
C. emitting a laser beam onto a first point of the additive manufacturing powder layer, so as to consolidate a first zone of the powder layer comprising the first point,
repeated for a given number of iterations,
wherein the step of detecting defects in the additive manufacturing powder layer deposited on a work zone further comprises implementing the method according to any of claims 1 to 4.

7. Method for selectively additively manufacturing a three-dimensional object from powder layers according to claim 6, further comprising an operation v.d) for calculating a score associated with a deposited additive manufacturing powder layer.

8. Method for selectively additively manufacturing a three-dimensional object from powder layers according to claim 7, wherein when the score calculated in operation v.d) is greater than a first threshold, the method further comprises an operation v.e) for reapplying, by means of the device for selectively additively manufacturing a three-dimensional object from powder layers (1), the additive manufacturing powder layer onto a substrate or onto a previously consolidated layer, followed by implementing step B.

9. Method for selectively additively manufacturing a three-dimensional object from powder layers according to claim 7, wherein when the score calculated in operation v.d) is greater than a second threshold, a counter of the number of defects is updated, the method further comprising an operation v.f) for notifying of an abnormal score when the number of defects counted exceeds a predefined number of defects.

10. Additive manufacturing device (1) comprising a tray (50) on which an additive manufacturing powder (90) is applied and a carriage (60) suitable for depositing the additive manufacturing powder (90) in the form of an additive manufacturing powder layer,
the additive manufacturing device (1) further comprising lighting means (34) and imaging means (33) suitable for acquiring an image of the deposited additive manufacturing powder layer, as well as data processing means (31, 21) and data storage means (32, 22) on which are recorded code instructions for executing by means of the data processing means (31, 21) a method for selectively additively manufacturing a three-dimensional object from powder layers according to any of claims 6 to 9.
